(19) Europäisches Patentamt
European Patent Office
Office européen des brevets

(11) **EP 1 174 259 A1**

(12) **EUROPEAN PATENT APPLICATION**
published in accordance with Art. 158(3) EPC

(43) Date of publication:
**23.01.2002 Bulletin 2002/04**

(51) Int Cl.⁷: **B32B 27/08**

(21) Application number: **00974952.4**

(22) Date of filing: **10.11.2000**

(86) International application number:
**PCT/JP00/07983**

(87) International publication number:
**WO 01/34386 (17.05.2001 Gazette 2001/20)**

(84) Designated Contracting States:
**AT BE CH CY DE DK ES FI FR GB GR IE IT LI LU MC NL PT SE TR**

(30) Priority: **11.11.1999 JP 32135999**

(71) Applicant: **TDK Corporation Tokyo 103-8272 (JP)**

(72) Inventors:
• **TAMAI, Kiminori, c/o TDK Corporation Tokyo 103-8272 (JP)**

• **YAMADA, Chieko, c/o TDK Corporation Tokyo 103-8272 (JP)**
• **YAMAZAKI, Katsuhiko, c/o TDK Corporation Tokyo 103-8272 (JP)**

(74) Representative:
**Pohlmann, Eckart, Dipl.-Phys. et al WILHELMS, KILIAN & PARTNER, Patentanwälte, Eduard-Schmid-Strasse 2 81541 München (DE)**

(54) **TRANSPARENT PLASTIC FILM HAVING HARD COAT LAYER**

(57)    A transparent plastic film having a hard-coating layer on one surface, more particularly a plastic film with a hard-coating layer which is used in fabricating a plastic molded article having the hard-coating layer given thereto by the injection molding method and in which no crack is generated after molding, is provided.

A transparent plastic film with a hard-coating layer, wherein, with x (µm) representing a thickness of a plastic base film, and y (%) representing an elongation percentage at the time when the film with the hard-coating layer is pulled under a condition at 22°C with one side fixed and at a pulling speed of 20 mm/min, no crack is generated in the hard-coating layer in a region satisfying a relationship: $y < 5.7$ if $x \leq 100$, $y < -0.018x + 7.5$ if $100 \leq x \leq 150$, $y < -0.008x + 6.0$ if $150 \leq x \leq 200$, $y < -0.005x + 5.4$ if $200 \leq x \leq 300$, $y < -0.003x + 4.8$ if $300 \leq x \leq 400$, $y < -0.002x + 4.4$ if $400 \leq x \leq 500$, and $y < 3.4$ if $500 \leq x$, when a tensile test is carried out under the above-mentioned condition.

Fig. 1

**Description**

TECHNICAL FIELD

The present invention relates to a transparent plastic film having a hard-coating layer on one surface thereof, and more particularly to a polycarbonate film with a hard-coating layer which film is used for application for various industrial materials or in fabricating a polycarbonate molded article (for example, a substrate or the like) to which the hard-coating layer is given by the injection molding method.

BACKGROUND ART

Hitherto, plastic molded articles composed of acrylic resins, polystyrene resins, polycarbonate resins, or other synthetic resins have advantages such as having a good moldability, being excellent in transparency, being lightweight, and being inexpensive, so that they are widely used as various industrial materials, architectural materials, ornamental materials, optical materials, home materials, and others.

On the other hand, compared with glass, metal or others, plastic molded articles have a poor scuff resistance because of their low surface hardness, and the surface thereof is liable to be damaged, thereby raising problems such as decrease in transparency and rise in stainability. For this reason, the surface hardness of the plastic molded articles must be raised to improve the scuff resistance.

As one method for improving the scuff resistance of the plastic molded articles, the surface hardness is improved by forming a hard-coating layer composed of a hard-coating material on the surface of the plastic molded articles.

As the hard-coating material, there are epoxy resin type, acrylic resin type, amino resin type, polysiloxane type and the like. The hard-coating layer is formed by dissolving these hard-coating material compositions in a suitable solvent, and forming a hard-coating film having a thickness of from several μm to several ten μm by means of coating such as spray coating or dip coating onto a molded article surface, followed by curing by means such as heating or ultraviolet irradiation.

However, this method is not preferable from the view point of industrial production although it can improve the surface hardness of the resin molded article. As reasons thereof, the following ① to ⑤ and others may be mentioned.

① The hard-coating layer must be formed for each molded article, thereby providing a low production efficiency. Even in the case of obtaining a plate-shaped molded article such as a window of an automobile or the like, continuous production is difficult, and it is inevitable to adopt a sheet-to-sheet method in which the application and curing are carried out sheet by sheet for each molded substrate. ② Since uniform thickness is not obtained by means of coating such as spray coating or dip coating, nonuniformity is generated in the surface hardness of the articles. ③ By the dip coating in the case of forming the hard-coating layer only on one surface of the molded article (for example, only on one surface of a substrate), a part not to be coated must be masked. ④ Conveyance of the molded articles in which the hard-coating layer is to be formed requires a lot of costs. ⑤ In the case of heat-treatable type hard-coating materials, change in dimensions occur due to warping, twisting or the like caused by molecular orientation or residual stress that are present in the plastic molded articles fabricated by injection molding, thereby generating a crack.

In order to solve these problems, a method has been devised in which a plastic film having a hard-coating layer given thereto in advance is supplied when a plastic molded article is injection-molded. This is a method in which the plastic film having the hard-coating layer given thereto in advance is mounted so that the hard-coating layer faces towards one mold surface of the mold of an injection molding apparatus, i.e. so that the hard-coating layer is positioned as an intended external surface of the final molded article, and then the mold is closed, and a molten resin is injected from a nozzle into a cavity between the base surface of the plastic film and the other mold surface of the mold, followed by cooling for molding. If the plastic film and the molten resin are resins of the same kind or the same type, the two are dissolved with each other at their interface and are completely integrated. By this method, final molded articles having the hard-coating layer given thereto are obtained simultaneously with the injection molding.

Further, by this method, it is possible to give the hard-coating layers on both external surfaces of the final plate-shaped molded article through one integration process by using two sheets of the plastic films to which the hard-coating layer is given in advance, and mounting the two sheets of the films so that the respective hard-coating layers face towards one mold surface and the other mold surface of the mold, i.e. so that the hard-coating layers are positioned as both of the intended external surfaces of the final plate-shaped molded article, for carrying out the injection molding. For this method, reference is made to Japanese Examined Patent Publication No. 01-47284/1989, Japanese Examined Patent Publication No. 04-9648/1992, and Japanese Examined Patent Publication No. 04-9649/1992.

However, this method involves a problem in quality that must be solved. It is a problem of crack generation (a crack is generated) in the hard-coating layer after molding.

Since the temperature of the molten resin used at the time of injection molding is high (for example, 310 to 320°C in the case of polycarbonate), the temperature of the hard-coating layer also rises via the plastic film. At this time, since the hard-coating layer is already cross-linked and cured, the hard-coating layer cannot follow the elongation of the plastic film. Further, it seems that a crack is generated in the hard-coating layer because the shrinkage factor greatly differs between the hard-coating layer and the plastic film or the molten resin in the process of being cooled from a high temperature state to an ordinary temperature.

In order to solve this problem, a method may be considered in which the thickness of the plastic film is increased to restrain the temperature imposed upon the hard-coating layer at the time of injection molding as much as possible. However, for this purpose, the thickness of the plastic film must be increased to about 500 μm or more. Since it requires a considerably much labor to wind up the plastic film having the thickness exceeding 500 μm nicely in a roll form, the formation of the hard-coating layer on such a thick plastic film must be carried out by the sheet-to-sheet method, because it is difficult to carry out the formation of the hard-coating layer by the continuous method. In other words, at the time of preparing the plastic film with the hard-coating layer, there occurs the same problem as in the case of giving the hard-coating layer directly to the molded article substrate.

On the other hand, Japanese Laid-open Patent Publication No. 11-70606/1999 discloses a hard-coating film which is a plastic film having a hard-coating layer formed thereon, which is used for a touch panel or the like of an electric appliance, in which the pencil hardness of the hard-coating is 2H or more, and in which a crack is not generated at the time of curvature of 10 mm or more by a mandrel test. However, this Publication does not consider the elongation percentage of the hard-coating layer at all.

DISCLOSURE OF THE INVENTION

OBJECT OF THE INVENTION

Thus, an object of the present invention is to provide a plastic film with a hard-coating layer which is used in fabricating a plastic molded article having the hard-coating layer given thereto by the injection molding method, and in which no crack is generated in the hard-coating layer after molding. In particular, an object of the present invention is to provide a polycarbonate film with a hard-coating layer for obtaining a polycarbonate molded article to which the hard-coating layer is given by the injection molding method.

SUMMARY OF THE INVENTION

As a result of eager studies, the present inventors have found out that the generation of a crack in a hard-coating layer after molding is related to the elongation percentage of the hard-coating layer at an ordinary temperature (22°C). The present inventors have made a study in further detail and found out that no crack is generated even after molding if it is a plastic film with a hard-coating layer in which no crack is generated in the hard-coating layer in a region where the plastic base film thickness x and the elongation percentage y at the time when the plastic film with the hard-coating layer is pulled under a specific condition satisfy a specific relationship, thereby arriving at the present invention.

In other words, the present invention is a transparent plastic film having a hard-coating layer on one surface of a plastic base film, wherein, with x (μm) representing a thickness of said base film, and y (%) representing an elongation percentage at the time when said plastic film having the hard-coating layer is pulled under a condition at 22°C with one side fixed and at a pulling speed of 20 mm/min, no crack is generated in the hard-coating layer in a region satisfying a relationship:

$$y < 5.7 \text{ if } x \leq 100,$$

$$y < -0.018x + 7.5 \text{ if } 100 \leq x \leq 150,$$

$$y < -0.008x + 6.0 \text{ if } 150 \leq x \leq 200,$$

$$y < -0.005x + 5.4 \text{ if } 200 \leq x \leq 300,$$

$$y < -0.003x + 4.8 \text{ if } 300 \leq x \leq 400,$$

$$y < -0.002x + 4.4 \text{ if } 400 \leq x \leq 500, \text{ and}$$

$$y < 3.4 \text{ if } 500 \leq x,$$

when a tensile test is carried out under said condition.

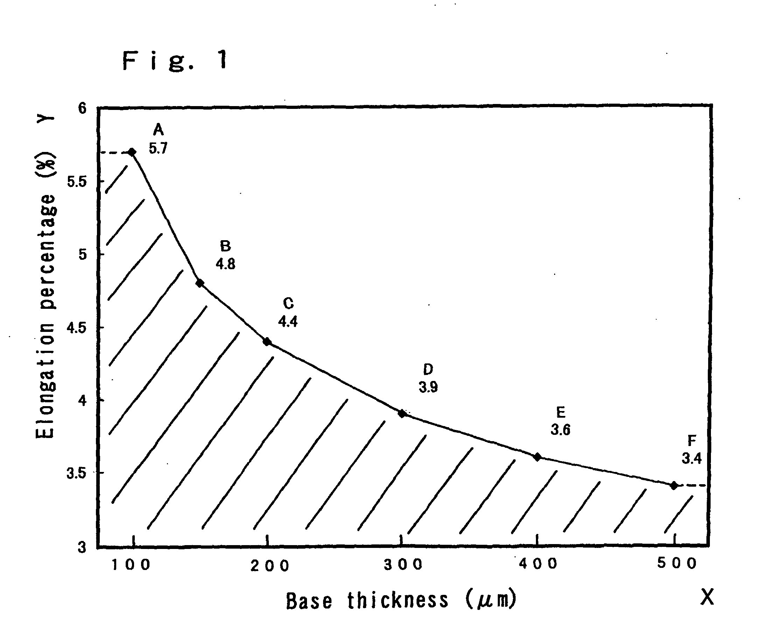

Fig. 1 is a graph illustrating a relationship between the base film thickness x ($\mu$m) and the elongation percentage y (%)of the plastic film with the hard-coating layer in the tensile test. Namely, in the graph, the line A-B, the line B-C, the line C-D, the line D-E, and the line E-F show, respectively,

$$A\text{-}B : y = -0.018x + 7.5 \text{ in } 100 \leq x \leq 150,$$

$$B\text{-}C : y = -0.008x + 6.0 \text{ in } 150 \leq x \leq 200,$$

$$C\text{-}D : y = -0.005x + 5.4 \text{ in } 200 \leq x \leq 300,$$

$$D\text{-}E : y = -0.003x + 4.8 \text{ in } 300 \leq x \leq 400, \text{ and}$$

$$E\text{-}F : y = -0.002x + 4.4 \text{ in } 400 \leq x \leq 500.$$

In the transparent plastic film having the hard-coating layer of the present invention, no crack is generated in the hard-coating layer in the region below the graph of Fig. 1 (the region in which oblique lines are drawn) when the tensile test is carried out under the above-mentioned condition.

In the present invention, a polycarbonate film is suitable as the plastic base film.

In the present invention, the transparent plastic film having the hard-coating layer is preferably wound in a roll form, from the viewpoint of production efficiency.

In the present invention, the plastic base film preferably has a thickness of from 100 $\mu$m to 500 $\mu$m, from the viewpoint of production efficiency.

The plastic film with the hard-coating layer of the present invention is suitably used for any one of applications for a display cover, a nameplate, and a packaging container.

The plastic film with the hard-coating layer of the present invention is preferably used for obtaining a molded article having the hard-coating layer given thereto by setting the transparent plastic film having the hard-coating layer on one surface of the plastic base film so that the hard-coating layer faces towards one mold surface in a mold for injection molding, clamping the plastic film so that a cavity is formed between a base surface of said film and the other mold surface, thereafter injecting a molten resin into said cavity and cooling the resin to mold a molded article body, and simultaneously to laminate and integrate said plastic film on a surface of the molded article body, in producing the plastic molded article by injection molding.

Also, the plastic film having the hard-coating layer of the present invention is preferably used for obtaining a plate-shaped molded article having the hard-coating layers given thereto on both surfaces by setting two sheets of the transparent plastic films having the hard-coating layer on one surface of the plastic base film so that the hard-coating layers respectively face towards one mold surface and the other mold surface in a mold for injection molding, clamping the plastic films so that a cavity is formed between base surfaces of said two sheets of the films, thereafter injecting a molten resin into said cavity and cooling the resin to mold a molded article body, and simultaneously to laminate and integrate said plastic films on both surfaces of the molded article body, in producing the plastic plate-shaped molded article by injection molding.

Such a molded article may be, for example, a window of an automobile such as a passenger car or a bus, a window of an electric train or an airplane, a show window, a transparent plate for a sun terrace, a sun roof of an automobile, or the like; however, the transparent plastic film with the hard-coating layer of the present invention can be applied to various other molded articles.

BRIEF DESCRIPTION OF THE DRAWINGS

Fig. 1 is a graph illustrating a relationship between the base film thickness x (μm) in a plastic film with a hard-coating layer and the elongation percentage y (%) of the plastic film with the hard-coating layer in a tensile test.
Fig. 2 is a cross-sectional view of a transparent plastic film with a hard-coating layer of the present invention.
Fig. 3 is a view for describing use of a transparent plastic film with a hard-coating layer of the present invention and is a cross-sectional view illustrating a state in which a mold for injection molding is clamped.
Fig. 4 is a cross-sectional view illustrating a layer constitution of a molded article obtained by the injection molding of Fig. 3 to which a hard-coating layer is given.
Fig. 5 is a view for describing use of a transparent plastic film with a hard-coating layer of the present invention and is a cross-sectional view illustrating a state in which a mold for injection molding is clamped.
Fig. 6 is a cross-sectional view illustrating a layer constitution of a molded article obtained by the injection molding of Fig. 5 to which hard-coating layers are given on both surfaces.

MODES FOR CARRYING OUT THE INVENTION

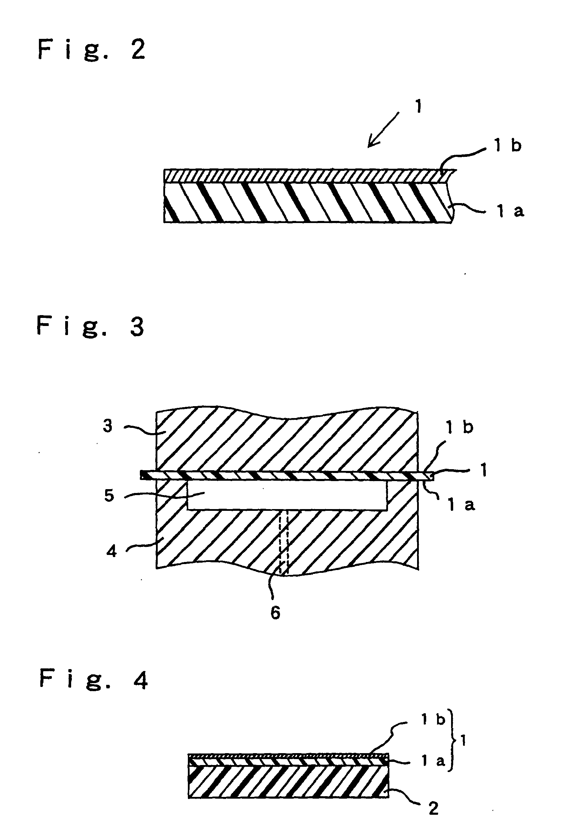

Fig. 2 is a cross-sectional view of a transparent plastic film with a hard-coating layer of the present invention. The transparent plastic film (1) with the hard-coating layer of the present invention has the hard-coating layer (1b) on one surface of a plastic base film (1a).
As a material for the plastic base film (1a), polycarbonate resin, polyester resin, polyamide resin, polyimide resin, acrylic resin, polystyrene resin, and others may be mentioned; however, the polycarbonate resin is suitable in view of being excellent in transparency, being lightweight, and being excellent in impact resistance. Further, in the case where the molded article body is composed of polycarbonate resin as in the window of an automobile or the like, the polycarbonate resin is suitable as a material for the plastic base film when one considers the integration of the molded article body with the base film. If the molded article body and the base film are of the same material or of materials having similar compatible structures, it is preferable because they are easily integrated by dissolving with each other at the time of injection molding.
The hard-coating layer (1b) is formed by applying a hard-coating material composition on the plastic base film (1a), followed by drying and curing.
As the hard-coating material, there are thermosetting type hard-coating materials such as silicone type and melamine type; however, ultraviolet-curable type hard-coating materials are preferable in view of productivity such as curing reactivity.
Radical-polymerizing hard-coating materials such as unsaturated polyester resin type and acrylic type, and cationic-polymerizing hard-coating materials such as epoxy type and vinyl ether type can be used as the ultraviolet-curable type hard-coating material. In view of curing reactivity and surface hardness, the acrylic type radical-polymerizing hard-coating materials are desirable.
The acrylic type radical-polymerizing hard-coating material comprises multi-functional (meth)acrylate having two or more (meth)acryloyl groups in a molecule and a photopolymerization initiator as main constituents.
As the multi-functional (meth)acrylate, for example, bifunctional (meth)acrylates such as 1,6-hexane di(meth)acrylate, (poly)ethylene glycol di(meth)acrylate, (poly)propylene glycol di(meth)acrylate and neopentyl glycol di(meth)acrylate, trifunctional (meth)acrylates such as pentaerythritol tri(meth)acrylate, trimethylolpropane tri(meth)acrylate, glycerol tri(meth)acrylate and tris-(2-hydroxyethyl)-isocyanuric acid ester (meth)acrylate, and (tetra or more)-functional (meth)acrylates such as pentaerythritol tetra(meth)acrylate and dipentaerythritol hexa(meth)acrylate may be mentioned.
Among these, for example, pentaerythritol tri(meth)acrylate, pentaerythritol tetra(meth)acrylate, dipentaerythritol hexa(meth)acrylate, and others are preferable in view of obtaining a high hardness.
Among these, one kind may be used alone, or two or more kinds may be used in combination. The amount of the aforesaid multi-functional (meth)acrylate to be used is about 20 to 80 wt% (as converted to solid components) in the hard-coating material.
Also, besides the aforesaid multi-functional (meth)acrylate, a photopolymerizing oligomer or polymer can be used. For example, it is an oligomer or polymer having (meth)acryloyl group at its terminal end and having a weight-average molecular weight Mw of, for example, about 1000 to 50000. As the oligomer or polymer part, for example, those formed from urethane polymer, epoxy polymer, polyester polymer, styrene polymer, styrene/acrylonitrile copolymer, styrene/(meth)acrylate copolymer, (meth)acrylate polymer, butadiene polymer, or silicone polymer, and others may be mentioned. As the photopolymerizing oligomer or polymer, for example, urethane (meth)acrylates obtained by allowing polyhydric alcohol, polyvalent isocyanate, and hydroxyl-group-containing (meth)acrylate to react; polyester (meth)acrylates obtained by esterifying polyhydric alcohol, polyvalent carboxylic acid and/or anhydride thereof, and (meth)acrylic acid; epoxy (meth)acrylates obtained by allowing a compound having two or more epoxy groups in a molecule to react with (meth)acrylic acid; polystyryl methacrylate; polybutadiene (meth)acrylate; and others may be mentioned.

As the photopolymerization initiator, various known ones can be used. For example, one may select from ketones (acetophenone, propiophenone, anthraquinone, thioxanthone, benzophenone, or their derivatives), benzoic acid esters (for example, methyl p-dimethylaminobenzoate), benzoin ethers or derivatives thereof (for example, benzoin methyl ether or benzoin ethyl ether), acylphosphine oxide, and others. Needless to say, photopolymerization initiators other than these may be used as well.

The amount of the photopolymerizing initiator to be used can be selected, for example, from a range of about 0.1 to 30 parts by weight, preferably about 1 to 20 parts by weight with respect to 100 parts by weight of the aforesaid multi-functional (meth)acrylate (A).

As an organic solvent that dilutes the aforesaid hard-coating material, those that dissolve the material constituting the hard-coating material can be used without limitation. For example, alcohols such as ethyl alcohol, n-propyl alcohol, isopropyl alcohol and n-butyl alcohol, ketones such as methyl ethyl ketone (MEK), methyl isobutyl ketone and cyclohexanone, ethyl acetate, butyl acetate, toluene, dibutylhydroxytoluene, xylene, 2-methoxyethanol, 2-ethoxyethanol, ethylene glycol dimethyl ether, ethylene glycol diethyl ether, diethylene glycol dimethyl ether, methyl cellosolve, ethyl cellosolve, dibutyl malate, and others may be mentioned as the organic solvent. The organic solvent may be used alone; however, in view of adhesive properties of the hard-coating layer to the plastic base film, the hardness of the hard-coating layer and the like, two or more kinds of the organic solvents are often mixed for use.

The blending ratio of the ultraviolet-curable type hard-coating material and the organic solvent in the hard-coating material composition is normally about 20 to 80 wt% of the ultraviolet-curable type hard-coating material and about 20 to 80 wt% of the organic solvent with respect to the total composition. It may be determined so that a good solubility and a suitable viscosity (suitability for coating) of the hard-coating material will be obtained.

Also, various known additives such as an ultraviolet absorbent, an ultraviolet stabilizer, an antioxidant, and a thermal polymerization prohibitor may be contained in the hard-coating material composition in accordance with the needs.

The hard-coating material composition can be obtained by dispersing or dissolving the hard-coating material components such as the multi-functional (meth)acrylate and the photopolymerization initiator into the aforesaid specific organic solvent by an ordinary method.

In order to obtain the plastic film with the hard-coating layer of the present invention, a method comprising applying continuously a hard-coating material composition on a long plastic base film wound in a roll form, drying, curing, and thereafter winding it in a roll form, is suitable in view of production efficiency.

The continuous application of the hard-coating material composition can be carried out by a known method such as the bar coating method, the doctor blade method, the reverse coating method, the Meyer bar coating method, the gravure coating method, the comma coating method, or the slit die coating method.

The drying after the application may be carried out, for example, within a temperature range of from 50 to 120°C, for' about 10 seconds to 5 minutes, for example. After drying, ultraviolet rays are irradiated for curing. The ultraviolet rays may be irradiated by irradiating ultraviolet rays for about 200 to 2000 mJ/cm$^2$ with the use of a lamp such as a xenon lamp, a low pressure mercury-vapor lamp, a middle pressure mercury-vapor lamp, a high pressure mercury-vapor lamp, a super high pressure mercury-vapor lamp, a metal halide lamp, a carbon arc lamp, or a tungsten lamp. After curing, the film having the hard-coating layer formed thereon is wound in a roll form.

Although there is a difference in the degree depending on the kind of the hard-coating material, the curing generally proceeds more if the amount of ultraviolet irradiation is increased. For this reason, when the aforesaid tensile test is carried out, the crack tends to be generated at a smaller elongation percentage y.

The plastic base film preferably has a thickness of from 100 μm to 500 μm, more preferably from 200 μm to 400 μm. If the thickness is smaller than 100 μm, wrinkles are generated in the film and the workability becomes poor in mounting the film with the hard-coating layer into a mold for injection molding. On the other hand, in the case of a film having a thickness larger than 500 μm, more labor is required in conveying the base film at the time of application and in winding the film in a roll form.

As shown in Fig. 1, according as the thickness x of the plastic base film increases, the requirements of the present invention can be satisfied even if the crack is generated at a smaller elongation percentage y when the aforesaid tensile test is carried out. According as the thickness of the base film increases, the temperature imposed upon the hard-coating layer is restrained when the plastic film with the hard-coating layer is used for injection molding, so that practical performance can be satisfied even if the elongation percentage y at the time of generation of the crack is low in the aforesaid tensile test.

The thickness of the hard-coating layer may be normally about 0.5 μm to 20 μm after curing, preferably about 2 μm to 15 μm after curing.

According as the thickness of the hard-coating layer increases, the crack tends to be generated at a smaller elongation percentage y when the aforesaid tensile test is carried out.

The following may be carried out in order to obtain the plastic film with the hard-coating layer in which no crack is generated in the hard-coating layer when the tensile test is carried out under the aforesaid condition in the region satisfying the requirements of the present invention, namely, in the region in which oblique lines are drawn in the graph of Fig. 1.

There is a difference in the absolute thickness of each hard-coating material depending on the hard-coating material to be used. The harder the hard-coating layer is, the more difficult it is to follow the elongation of the plastic base film. First, the hardness specific to the hard-coating material is taken into account.

Then, as described above, according as the amount of ultraviolet irradiation increases at the time of forming the hard-coating layer and according as the thickness of the hard-coating layer increases, the crack tends to be generated at a smaller elongation percentage y when the aforesaid tensile test is carried out. Conversely, according as the thickness x of the plastic base film increases, the requirements of the present invention tend to be satisfied even if the crack is generated at a smaller elongation percentage y when the aforesaid tensile test is carried out. By taking into account and adjusting these various conditions, it is possible to obtain the plastic film with the hard-coating layer that satisfies the requirements of the present invention.

Next, with reference to Figs. 3, 4, 5, and 6, use of the plastic film with the hard-coating layer of the present invention in the injection molding method will be described.

Fig. 3 is a cross-sectional view illustrating a state in which a mold for injection molding is clamped, and Fig. 4 is a cross-sectional view illustrating a layer constitution of a molded article obtained by the injection molding of Fig. 3 to which the hard-coating layer is given.

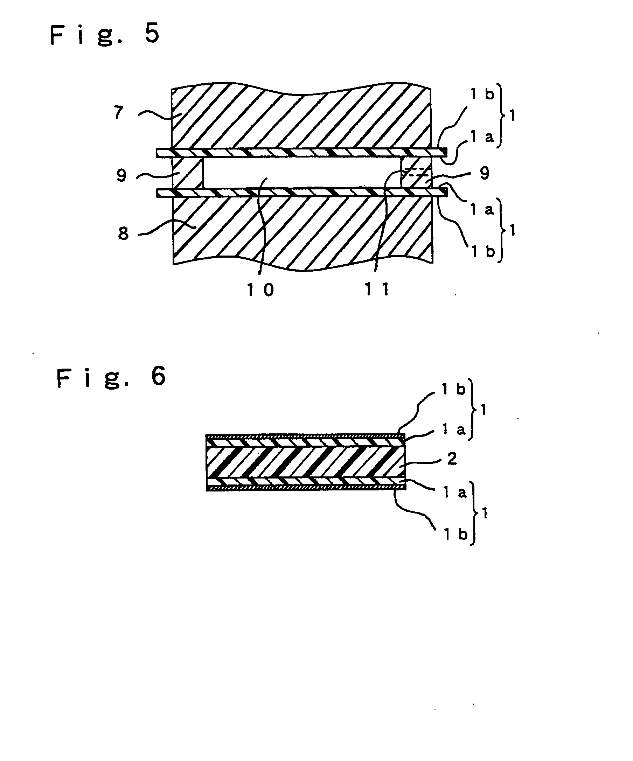

Fig. 5 is a cross-sectional view illustrating a state in which a mold for injection molding is clamped, and Fig. 6 is a cross-sectional view illustrating a layer constitution of a molded article obtained by the injection molding of Fig. 5 to which the hard-coating layers are given on both surfaces.

Referring to Fig. 3, the plastic film (1) with the hard-coating layer of the present invention is set so that the hard-coating layer (1b) faces towards a movable mold (3) of the mold for injection molding, and is clamped so that a cavity (5) is formed between a surface of the film base (1a) and a surface of a fixed mold (4). Thereafter, a molten resin is injected into the cavity (5) from a gate (6) and cooled by an ordinary method.

As illustrated in Fig. 4, this operation molds a molded article body (2) and, at the same time, laminates and integrates the plastic film (1) on the surface of the molded article body (2) to obtain the molded article to which the hard-coating layer (1b) is given. At this time, it is preferable that the molten resin to be injected that constitutes the molded article body (2) and the material of the base film (1a) are easily compatible with each other, particularly of the same material. By the heat at the time of injection molding, the surface of the base film (1a) at the cavity (5) side is melted to be fused and is firmly integrated with the molded article body (2). After molding, the two molds (3) and (4) are opened to take the molded article out, and a required part is trimmed to obtain a completed article.

By using the plastic film (1) with the hard-coating layer of the present invention, no crack is generated in the hard-coating layer by the heat at the time of injection molding and by cooling from a high temperature state to an ordinary temperature.

Fig. 5 shows a case of producing the molded article to which the hard-coating layers are given on both surfaces, and two sheets of the plastic film with the hard-coating layer of the present invention are used.

Referring to Fig. 5, the plastic films (1) (1) with the hard-coating layer are sandwiched and set surrounding by a movable mold (7), a fixed mold (8) and a slide mold (9) so that the hard-coating layers (1b) (1b) face respectively towards a movable mold (7) surface and a fixed mold (8) surface of the mold for injection molding, and are clamped so that a cavity (10) is formed between the surface of the film bases (1a) (1a). Thereafter, a molten resin is injected into the cavity (10) from a gate (11) and cooled by an ordinary method.

As illustrated in Fig. 6, this operation molds a molded article body (2) and, at the same time, laminates and integrates the plastic films (1) (1) on both surfaces of the molded article body (2) to obtain the molded article to which the hard-coating layers (1b) (1b) are given on both surfaces. After molding, the molds (7) (8) and (9) are opened to take the molded article out, and a required part is trimmed to obtain a completed article.

By using the plastic films (1) (1) with the hard-coating layer of the present invention, no crack is generated in the hard-coating layer by the heat at the time of injection molding or by cooling from a high temperature state to an ordinary temperature. Thus, the molded article having the hard-coating layers given thereto on both surfaces can be obtained. Further, if the hard-coating layers in the two sheets of films (1) (1) to be used are made to differ within the range of the present invention, it is possible to give the hard-coating layers having different characteristics on the two surfaces of the molded article body (2). For example, in the case of a window of an automobile, it is possible to give optimal hard-coating layers to the outside of the window and to the inside of the car.

EXAMPLES

Hereafter, the present invention will be more specifically described by raising examples; however, the present invention is not limited to these examples. In the following, "parts" representing an amount refer to parts by weight unless specifically mentioned.

[Example 1]

(Plastic base film)

A polycarbonate film having a width of 12 cm and a thickness of 100 μm fabricated by extrusion molding was used.

(Hard-coating material composition A)

| photopolymerizing monomer: | |
| --- | --- |
| pentaerythritol triacrylate | 4 parts |
| pentaerythritol tetraacrylate | 10 parts |
| photopolymerizing oligomer: | 13 parts |
| urethane acrylate (having a molecular weight of about 1000 to 2000) | |
| photopolymerization initiator: Irgacure 184 (manufactured by Chiba Geigy Co., Ltd.) | 3 parts |
| MEK / toluene / butyl acetate / isopropyl alcohol = 1 / 1 / 1 / 1 (weight ratio) | 70 parts |

The above were mixed and dissolved to obtain an ultraviolet-curable resin composition A.

After the aforesaid composition was applied onto the aforesaid polycarbonate film having a thickness of 100 μm by the Meyer bar coating method and dried, ultraviolet irradiation (irradiation amount: 300 mJ/cm$^2$) was carried out with a high pressure mercury-vapor lamp for curing to form a hard-coating layer having a thickness of 5 μm and this was wound in a roll form. Thus, the transparent polycarbonate film with the hard-coating layer was obtained.

(Tensile test)

The obtained polycarbonate film with the hard-coating layer was cut into a size of 15 cm x 1 cm, and was mounted onto Tensilon so that the chucking distance of the sample would be 10 cm. Next, with the lower chucking part fixed, the upper chucking part was pulled upwards at a speed of 20 mm/min to observe what elongation percentage (in percent) of the film caused generation of a crack in the hard-coating layer. The observation of the crack was carried out with the use of a 10-fold magnifier. Here, the tensile test was carried out at 22°C.

The elongation percentage of the polycarbonate film with the hard-coating layer of Example 1 at the time of generation of the crack was 8.2%.

(Injection molding)

The obtained polycarbonate film with the hard-coating layer was cut into a size of 10 cm x 20 cm. With reference to Fig. 3, this film was mounted on molds (3) (4) for injection molding and clamped so that the hard-coating layer (1b) faces upwards. Next, injection molding was carried out with a molten polycarbonate resin temperature of 315°C, a mold temperature of 80°C, and a molding time of 30 sec including the molten polycarbonate resin filling time and the cooling time, thereby to obtain a molded article substrate having the hard-coating layer given thereto on one surface. Whether the crack had been generated in the hard-coating layer after molding or not was observed by viewing and with the use of a 10-fold magnifier.

In the case where the polycarbonate film with the hard-coating layer of Example 1 was used, no crack had been generated in the hard-coating layer after molding.

With respect to the polycarbonate films with the hard-coating layer obtained in the following Examples 2 to 24 and Comparative Examples 1 to 12, the tensile test was carried out in the same manner as in Example 1 to determine the elongation percentage at the time of the generation of the crack. Also, the injection molding was carried out in the same manner as in Example 1 to evaluate the presence or absence of the generation of the crack in the hard-coating layer after molding.

[Example 2]

The process was carried out in the same manner as in Example 1 except that a polycarbonate film having a thickness of 150 μm was used.

[Example 3]

The process was carried out in the same manner as in Example 1 except that a polycarbonate film having a thickness of 200 μm was used.

[Example 4]

The process was carried out in the same manner as in Example 1 except that a polycarbonate film having a thickness of 300 μm was used.

[Example 5]

The process was carried out in the same manner as in Example 1 except that a polycarbonate film having a thickness of 400 μm was used.

[Example 6]

The process was carried out in the same manner as in Example 1 except that a polycarbonate film having a thickness of 500 μm was used.

[Example 7]

The process was carried out in the same manner as in Example 1 except that the amount of application of the hard-coating material composition A was changed to allow the thickness of the hard-coating layer to be 3 μm.

[Example 8]

The process was carried out in the same manner as in Example 1 except that the amount of application of the hard-coating material composition A was changed to allow the thickness of the hard-coating layer to be 10 μm.

[Example 9]

The process was carried out in the same manner as in Example 8 except that the amount of ultraviolet irradiation was changed to be 1000 mJ/cm$^2$.

[Comparative Example 1]

The process was carried out in the same manner as in Example 9 except that the amount of application of the hard-coating material composition A was changed to allow the thickness of the hard-coating layer to be 15 μm.

[Example 10]

(Hard-coating material composition B)

| photopolymerizing monomer: | |
|---|---|
| dicyclopentanyl acrylate | 8 parts |
| pentaerythritol triacrylate | 9 parts |

(continued)

| photopolymerizing monomer: | |
|---|---|
| pentaerythritol tetraacrylate | 7 parts |
| 1,6-hexanediol diacrylate | 3 parts |
| photopolymerization initiator: Irgacure 907 (manufactured by Chiba Geigy Co., Ltd.) | 3 parts |
| toluene / isopropyl alcohol = 1 / 1 (weight ratio) | 70 parts |

The above were mixed and dissolved to obtain an ultraviolet-curable resin composition B.

The process was carried out in the same manner as in Example 2 except that the hard-coating material composition B was used in place of the hard-coating material composition A.

[Example 11]

The process was carried out in the same manner as in Example 10 except that a polycarbonate film having a thickness of 200 μm was used.

[Example 12]

The process was carried out in the same manner as in Example 10 except that a polycarbonate film having a thickness of 300 μm was used.

[Example 13]

The process was carried out in the same manner as in Example 10 except that a polycarbonate film having a thickness of 400 μm was used.

[Example 14]

The process was carried out in the same manner as in Example 10 except that a polycarbonate film having a thickness of 500 μm was used.

[Example 15]

The process was carried out in the same manner as in Example 7 except that the hard-coating material composition B was used in place of the hard-coating material composition A.

[Comparative Example 2]

The process was carried out in the same manner as in Example 10 except that a polycarbonate film having a thickness of 100 μm was used.

[Example 16]

The process was carried out in the same manner as in Example 11 except that the amount of ultraviolet irradiation was changed to be 1000 mJ/cm$^2$.

[Example 17]

The process was carried out in the same manner as in Example 16 except that a polycarbonate film having a thickness of 300 μm was used.

[Example 18]

The process was carried out in the same manner as in Example 17 except that the amount of application of the hard-coating material composition B was changed to allow the thickness of the hard-coating layer to be 10 μm.

[Example 19]

The process was carried out in the same manner as in Example 18 except that a polycarbonate film having a thickness of 400 μm was used.

[Example 20]

The process was carried out in the same manner as in Example 18 except that a polycarbonate film having a thickness of 500 μm was used.

[Comparative Example 3]

The process was carried out in the same manner as in Example 16 except that a polycarbonate film having a thickness of 150 μm was used.

[Comparative Example 4]

The process was carried out in the same manner as in Example 18 except that a polycarbonate film having a thickness of 200 μm was used.

[Comparative Example 5]

The process was carried out in the same manner as in Example 18 except that the amount of application of the hard-coating material composition B was changed to allow the thickness of the hard-coating layer to be 15 μm.

[Example 21]

The process was carried out in the same manner as in Example 19 except that the amount of application of the hard-coating material composition B was changed to allow the thickness of the hard-coating layer to be 15 μm.

[Example 22]

The process was carried out in the same manner as in Example 21 except that a polycarbonate film having a thickness of 500 μm was used.

[Comparative Example 6]

(Hard-coating material composition C)

| | |
|---|---|
| photopolymerizing monomer:<br>    pentaerythritol tetraacrylate | 15 parts |
| photopolymerizing oligomer:<br>    polyester acrylate (having a molecular weight of about 1200 to 1500) | 12 parts |
| photopolymerization initiator: Irgacure 184 (manufactured by Chiba Geigy Co., Ltd.) | 3 parts |
| toluene / isopropyl alcohol = 1 / 1 (weight ratio) | 70 parts |

The above were mixed and dissolved to obtain an ultraviolet-curable resin composition C.
The process was carried out in the same manner as in Example 17 except that the hard-coating material composition C was used in place of the hard-coating material composition B.

[Comparative Example 7]

The process was carried out in the same manner as in Comparative Example 2 except that the hard-coating material composition C was used in place of the hard-coating material composition B.

[Comparative Example 8]

The process was carried out in the same manner as in Comparative Example 7 except that a polycarbonate film having a thickness of 150 μm was used.

[Comparative Example 9]

The process was carried out in the same manner as in Comparative Example 7 except that a polycarbonate film having a thickness of 200 μm was used.

[Comparative Example 10]

The process was carried out in the same manner as in Comparative Example 7 except that a polycarbonate film having a thickness of 300 μm was used.

[Example 23]

The process was carried out in the same manner as in Comparative Example 7 except that a polycarbonate film having a thickness of 400 μm was used.

[Example 24]

The process was carried out in the same manner as in Comparative Example 7 except that a polycarbonate film having a thickness of 500 μm was used.

[Comparative Example 11]

The process was carried out in the same manner as in Example 23 except that the amount of ultraviolet irradiation was changed to be 1000 mJ/cm$^2$.

[Comparative Example 12]

The process was carried out in the same manner as in Comparative Example 11 except that a polycarbonate film having a thickness of 500 μm was used.
The results of Examples 1 to 24 and Comparative Examples 1 to 11 are shown in Table 1.

Table 1

| | Hard-coating material composition | Base thickness (μm) | Hard-coating layer thickness (μm) | UV irradiation amount (mJ/cm$^2$) | Elongation percentage (%) at the time of generation of a crack in tensile test | Presence or absence of generation of a crack at the time of injection molding |
|---|---|---|---|---|---|---|
| Example 1 | A | 100 | 5 | 300 | 8.2 | absent |
| Example 2 | A | 150 | 5 | 300 | 8.5 | absent |
| Example 3 | A | 200 | 5 | 300 | 9.3 | absent |
| Example 4 | A | 300 | 5 | 300 | 9.7 | absent |
| Example 5 | A | 400 | 5 | 300 | 10.2 | absent |
| Example 6 | A | 500 | 5 | 300 | 10.6 | absent |
| Example 7 | A | 100 | 3 | 300 | 10.0 | absent |
| Example 8 | A | 100 | 10 | 300 | 7.0 | absent |
| Example 9 | A | 100 | 10 | 1000 | 5.7 | absent |

Table 1   (continued)

| | Hard-coating material composition | Base thickness (μm) | Hard-coating layer thickness (μm) | UV irradiation amount (mJ/cm²) | Elongation percentage (%) at the time of generation of a crack in tensile test | Presence or absence of generation of a crack at the time of injection molding |
|---|---|---|---|---|---|---|
| Comparative Example 1 | A | 100 | 15 | 1000 | 5.1 | present |
| Example 10 | B | 150 | 5 | 300 | 4.8 | absent |
| Example 11 | B | 200 | 5 | 300 | 5.3 | absent |
| Example 12 | B | 300 | 5 | 300 | 5.6 | absent |
| Example 13 | B | 400 | 5 | 300 | 5.8 | absent |
| Example 14 | B | 500 | 5 | 300 | 6.0 | absent |
| Example 15 | B | 100 | 3 | 300 | 5.8 | absent |
| Comparative Example 2 | B | 100 | 5 | 300 | 4.6 | present |
| Example 16 | B | 200 | 5 | 1000 | 4.4 | absent |
| Example 17 | B | 300 | 5 | 1000 | 4.5 | absent |
| Example 18 | B | 300 | 10 | 1000 | 3.9 | absent |
| Example 19 | B | 400 | 10 | 1000 | 4.1 | absent |
| Example 20 | B | 500 | 10 | 1000 | 4.3 | absent |
| Comparative Example 3 | B | 150 | 5 | 1000 | 4.2 | present |
| Comparative Example 4 | B | 200 | 10 | 1000 | 3.8 | present |
| Comparative Example 5 | B | 300 | 15 | 1000 | 3.5 | present |
| Example 21 | B | 400 | 15 | 1000 | 3.6 | absent |
| Example 22 | B | 500 | 15 | 1000 | 3.8 | absent |
| Comparative Example 6 | C | 300 | 5 | 1000 | 3.0 | present |
| Comparative Example 7 | C | 100 | 5 | 300 | 2.9 | present |
| Comparative Example 8 | C | 150 | 5 | 300 | 3.2 | present |
| Comparative Example 9 | C | 200 | 5 | 300 | 3.4 | present |
| Comparative Example 10 | C | 300 | 5 | 300 | 3.6 | present |
| Example 23 | C | 400 | 5 | 300 | 3.8 | absent |
| Example 24 | C | 500 | 5 | 300 | 3.9 | absent |
| Comparative Example 11 | C | 400 | 5 | 1000 | 3.0 | present |

Table 1 (continued)

| | Hard-coating material composition | Base thickness (μm) | Hard-coating layer thickness (μm) | UV irradiation amount (mJ/cm$^2$) | Elongation percentage (%) at the time of generation of a crack in tensile test | Presence or absence of generation of a crack at the time of injection molding |
|---|---|---|---|---|---|---|
| Comparative Example 12 | C | 500 | 5 | 1000 | 3.1 | present |

From Table 1, no generation of the crack was found in the hard-coating layer after molding in any of Examples 1 to 24. On the other hand, in Comparative Examples 1 to 11, the crack had been generated in the hard-coating layer after molding.

[Example 25]

Injection molding was carried out as follows with the use of the polycarbonate film with the hard-coating layer obtained in Example 1.

The obtained polycarbonate film with the hard-coating layer was cut into a size of 10 cm x 20 cm, and two sheets thereof were prepared. With reference to Fig. 5, the two sheets of the films were mounted on molds (7) (8) (9) for injection molding so that the hard-coating layers (1b) (1b) respectively face upwards and downwards, and were clamped so that a cavity (10) would be formed between the bases (1a) (1a) of the two films. Next, injection molding was carried out with a molten polycarbonate resin temperature of 315°C, a mold temperature of 80°C, and a molding time of 30 sec including the molten polycarbonate resin filling time and the cooling time, thereby to obtain a molded article substrate having the hard-coating layers given on both surfaces. Whether the crack had been generated in the hard-coating layer after molding or not was observed by viewing and with the use of a 10-fold magnifier. No crack had been generated in the hard-coating layer on any of the two surfaces after molding.

The present invention can be carried out in various other modes without departing from the spirit or essential characteristics thereof. Therefore, the above-described examples are merely illustrative in all respects, and must not be construed as being restrictive. Further, the changes that fall within the equivalents of the claims are all within the scope of the present invention.

INDUSTRIAL APPLICABILITY

The present invention provides a plastic film having a hard-coating layer in which no crack is generated. The aforesaid plastic film with the hard-coating layer is excellent in scuff resistance, and can be used widely, for example, as various industrial materials such as a display cover of an OA apparatus, a nameplate, and a food packaging container, an architectural material, an ornamental material, an optical material, a home material, and others.

When the aforesaid plastic film with the hard-coating layer is used in fabricating a plastic molded article having the hard-coating layer given thereto by injection molding, no crack is generated in the hard-coating layer after molding. In particular, the present invention provides a polycarbonate film with a hard-coating layer for obtaining a polycarbonate molded article having the hard-coating layer given thereto by the injection molding method.

The plastic film with the hard-coating layer of the present invention can be used in the case of producing various injection-molded articles; however, the plastic film of the present invention is especially suitable in the case of producing a window of an automobile, a window of an electric train, an airplane or the like, a show window, a transparent plate for a sun terrace, a sun roof of an automobile, and others having the hard-coating layer given thereto.

**Claims**

1. A transparent plastic film having a hard-coating layer on one surface of a plastic base film, wherein, with x (μm) representing a thickness of said base film, and y (%) representing an elongation percentage at the time when said plastic film having the hard-coating layer is pulled under a condition at 22°C with one side fixed and at a pulling speed of 20 mm/min, no crack is generated in the hard-coating layer in a region satisfying a relationship:

$$y < 5.7 \text{ if } x \leq 100,$$

$$y < -0.018x + 7.5 \text{ if } 100 \leq x \leq 150,$$

$$y < -0.008x + 6.0 \text{ if } 150 \leq x \leq 200,$$

$$y < -0.005x + 5.4 \text{ if } 200 \leq x \leq 300,$$

$$y < -0.003x + 4.8 \text{ if } 300 \leq x \leq 400,$$

$$y < -0.002x + 4.4 \text{ if } 400 \leq x \leq 500, \text{ and}$$

$$y < 3.4 \text{ if } 500 \leq x,$$

when a tensile test is carried out under said condition.

2. The transparent plastic film having the hard-coating layer according to claim 1, wherein said plastic base film is a polycarbonate film.

3. The transparent plastic film having the hard-coating layer according to claim 1, which is wound in a roll form.

4. The transparent plastic film having the hard-coating layer according to any one of claims 1 to 3, wherein said plastic base film has a thickness of from 100 μm to 500 μm.

5. The transparent plastic film having the hard-coating layer according to any one of claims 1 to 4, which is used for any one of applications for a display cover, a nameplate, and a packaging container.

6. The transparent plastic film having the hard-coating layer according to any one of claims 1 to 4, which is used for obtaining a molded article having the hard-coating layer given thereto by setting the transparent plastic film having the hard-coating layer on one surface of the plastic base film so that the hard-coating layer faces towards one mold surface in a mold for injection molding, clamping the plastic film so that a cavity is formed between a base surface of said film and the other mold surface, thereafter injecting a molten resin into said cavity and cooling the resin to mold a molded article body, and simultaneously to laminate and integrate said plastic film on a surface of the molded article body, in producing the plastic molded article by injection molding.

7. The transparent plastic film having the hard-coating layer according to any one of claims 1 to 4, which is used for obtaining a plate-shaped molded article having the hard-coating layers given thereto on both surfaces by setting two sheets of the transparent plastic films having the hard-coating layer on one surface of the plastic base film so that the hard-coating layers respectively face towards one mold surface and the other mold surface in a mold for injection molding, clamping the plastic films so that a cavity is formed between base surfaces of said two sheets of the films, thereafter injecting a molten resin into said cavity and cooling the resin to mold a molded article body, and simultaneously to laminate and integrate said plastic films on both surfaces of the molded article body, in producing the plastic plate-shaped molded article by injection molding.

Fig. 1

Fig. 2

Fig. 3

Fig. 4

Fig. 5

Fig. 6

<div align="center">

**INTERNATIONAL SEARCH REPORT**

</div>

| International application No. |
|---|
| PCT/JP00/07983 |

| A. CLASSIFICATION OF SUBJECT MATTER |
|---|
| Int.Cl⁷ B32B27/08 |

According to International Patent Classification (IPC) or to both national classification and IPC

| B. FIELDS SEARCHED |
|---|
| Minimum documentation searched (classification system followed by classification symbols) |
| Int.Cl⁷ B32B |
| Documentation searched other than minimum documentation to the extent that such documents are included in the fields searched |
| Electronic data base consulted during the international search (name of data base and, where practicable, search terms used) |
| WPI/L |

C. DOCUMENTS CONSIDERED TO BE RELEVANT

| Category* | Citation of document, with indication, where appropriate, of the relevant passages | Relevant to claim No. |
|---|---|---|
| Y | JP, 11-070606, A (Dainippon Printing Co., Ltd.), 16 March, 1999 (16.03.99), Claims (Family: none) | 1-5 6,7 |
| Y | JP, 08-108695, A (Dainippon Printing Co., Ltd.), 30 April, 1996 (30.04.96), Claims; example; [Effects of the Invention] (Family: none) | 1-5 |
| Y | JP, 08-011420, A (Dainippon Printing Co., Ltd.), 16 January, 1996 (16.01.96), Claims; example; [Effects of the Invention] (Family: none) | 1-5 |
| Y | JP, 03-114719, A (Hashimoto Forming Ind. Co., Ltd.), 15 May, 1991 (15.05.91), Claims, (Family: none) | 6,7 |

☒ Further documents are listed in the continuation of Box C. ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01 February, 2001 (01.02.01) | I3 February, 2001 (13.02.01) |

| Name and mailing address of the ISA/ | Authorized officer |
|---|---|
| Japanese Patent Office | |
| Facsimile No. | Telephone No. |

Form PCT/ISA/210 (second sheet) (July 1992)

## INTERNATIONAL SEARCH REPORT

| International application No. |
|---|
| PCT/JP00/07983 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP, 06-270350, A (SEKISUI JUSHI CORPORATION), 27 September, 1994 (27.09.94), Full text  (Family: none) | 1-7 |
| A | JP, 09-156015, A (Kimoto Co., Ltd.), 17 June, 1997 (17.06.97), Full text  (Family: none) | 1-7 |

Form PCT/ISA/210 (continuation of second sheet) (July 1992)